# EUROPEAN PATENT SPECIFICATION

(11) **EP 3 486 622 B1**
(45) Date of publication and mention of the grant of the patent: **22.11.2023**
(21) Application number: 16908842.4
(22) Date of filing: 14.07.2016
(51) Int. Cl.: G01J 1/02, G01V 8/12, G01J 5/00, G01J 5/02, G01J 5/04, G01J 5/07, G01J 5/0813

(54) **HEAT RAY SENSOR**
WÄRMESTRAHLENSENSOR
CAPTEUR DE RAYONNEMENT THERMIQUE

(43) Date of publication of application: 22.05.2019
(73) Proprietor: Atsumi Electric Co., Ltd., Kita-ku Hamamatsu-shi Shizuoka 431-2103 (JP)
(72) Inventor: KAWAI, Koji, Hamamatsu-shi Shizuoka 431-2103 (JP); SAKAI, Hideaki, Hamamatsu-shi Shizuoka 431-2103 (JP)
(74) Representative: v. Bezold & Partner Patentanwälte - PartG mbB
(86) International application number: PCT/JP2016/070810
(87) International publication number: WO 2018/011940

(56) References cited:
- EP-A1- 0 933 623
- EP-A2- 2 592 442
- WO-A1-98/34085
- WO-A1-2015/182061
- JP-A- 2006 309 743
- JP-U- H 058 695
- JP-U- H 058 695

## Description

### Technical Field

The present disclosure relates to a heat ray sensor.

### Background Art

Conventionally, there have been heat ray sensors that detect the presence of a human body that moves in a detection area, on the basis of variations in heat rays (infrared rays) radiated from the interior of the detection area. For example, Patent Literature 1 discloses a heat ray sensor including two sensor units that are arranged in a line in a vertical direction and detect heat rays released from detection areas of different heights. This heat ray sensor prevents false detection of a non-human moving object by detecting the presence of the human body in a detection area on the basis of variations in heat rays detected by the two sensor units.

### Citation List

### Patent Literature

Patent Literature 1: Unexamined Japanese Patent Application Kokai Publication No. H9-101376

Document WO 2015/182061 A1 discloses a method for controlling a sensor executed by an air conditioner, wherein according to a first and second scanning method blocks of infrared sensors each obtain thermal data of a subject in an air conditioned space.

Document EP 0 933 623 A1 discloses a compound-eye crime prevention sensor system which reliably distinguishes between a human being and a small animal irrespective of the distance from the detector, wherein the system includes two detection axes. The system recognizes size of an object by detecting whether the object crosses one or both detection axes.

Document JP H05 8695 U discloses an infrared beam transmitting and receiving equipment incorporating two optical devices, wherein by adjusting the inclination angle of the first optical device also automatically adjusts the other optical device.

Document JP 2006 309743 A discloses a sensor device for crime prevention comprising a sensor body including two sensor elements for transmitting or receiving detection wave IR for object detection, and a cover covering the sensor body. A movement direction of an actuator of a cover opening/closing detection switch is set perpendicular to an opening/closing direction of the cover.

### Summary of Invention

### Technical Problem

However, the detection area of the heat ray sensor disclosed in Patent Literature 1 is set on the assumption that a wall to which the heat ray sensor is attached is vertical, and a surface on which a human body to be detected moves is horizontal. Therefore, such configuration suffers in that, for example, when the wall to which the heat ray sensor is attached or the surface on which the human body to be detected moves inclines, means are required such as attaching the heat ray sensor itself at an incline in order to adjust the detection area in accordance with such inclination.

The present disclosure is intended to solve such problems as described above, and an objective of the present disclosure is to provide a heat ray sensor that enables easy adjustment of the detection area. The heat ray sensor is defined by the appended claims.

### Solution to Problem

A heat ray sensor according to the present disclosure includes: a first optical unit for outputting a first signal based on a variation in heat rays radiated from a first detection area;
a second optical unit that is arranged side by side with the first optical unit, for outputting a second signal based on a variation in heat rays radiated from a second detection area; and
a casing that houses the first optical unit and the second optical unit,
wherein the casing integrally supports the first optical unit and the second optical unit swingably about an axis orthogonal to a direction of arrangement of the first optical unit and the second optical unit the first optical unit (100) comprises: a first pyroelectric element (120) for outputting the first signal; a first optical system (110) for transferring, to the first pyroelectric element (120), heat rays radiated from the first detection area; and a first housing (130) that supports the first pyroelectric element (120) and the first optical system (110), the second optical unit (200) comprises: a second pyroelectric element (220) for outputting the second signal; a second optical system (210) for transferring, to the second pyroelectric element (220), heat rays radiated from the second detection area; and a second housing (230) that supports the second pyroelectric element (220) and the second optical system (210) and is linked to the first housing (130), and the casing (300) supports the first housing (130) swingably about the axis (A).

### Advantageous Effects of Invention

According to the present disclosure, a detection area can be easily adjusted.

### Brief Description of Drawings

FIG. 1 is a perspective view illustrating an internal configuration of a heat ray sensor according to an embodiment of the present disclosure;
FIG. 2A is a side view illustrating the internal configuration of the heat ray sensor according to the embodiment of the present disclosure at an uppermost position;
FIG. 2B is a side view illustrating the internal configuration of the heat ray sensor according to the embodiment of the present disclosure at a lowermost position;
FIG. 3 is a block diagram illustrating a circuit configuration of a detector;
FIG. 4A is a side view illustrating an example of a first detection area and a second detection area at the uppermost position illustrated in FIG. 2A; and
FIG. 4B is a side view illustrating an example of the first detection area and the second detection area at the lowermost position illustrated in FIG. 2B.

### Description of Embodiments

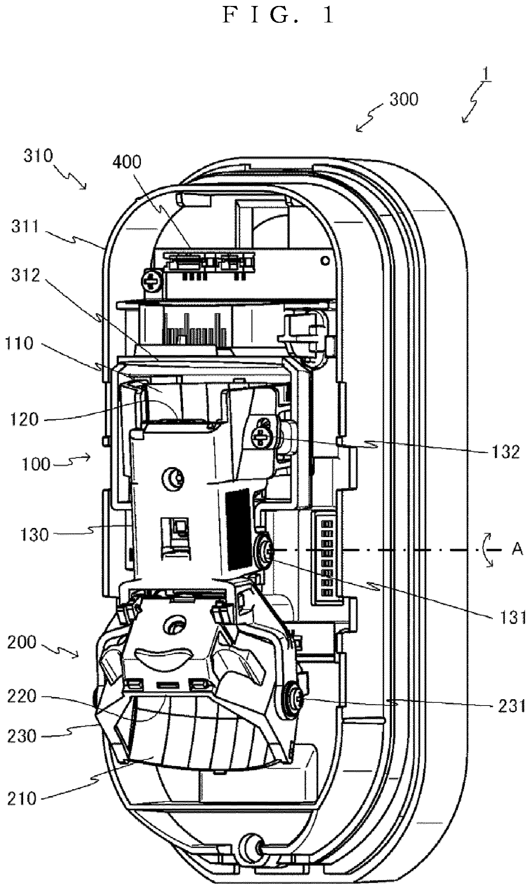

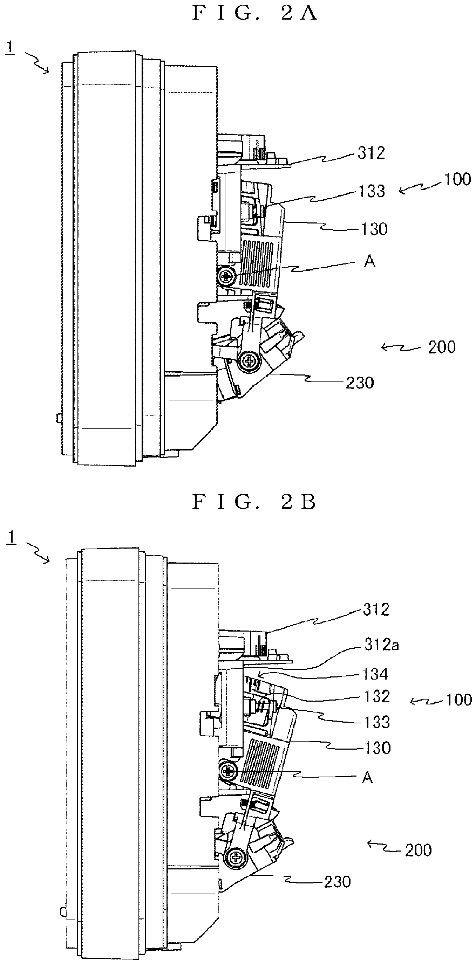

Embodiments of the present disclosure are described below with reference to the drawings. FIG. 1 is a perspective view illustrating an internal configuration of a heat ray sensor 1 according to an embodiment of the present disclosure, and FIGS. 2A and 2B are side views illustrating the internal configuration of the heat ray sensor 1 according to the embodiment of the present disclosure. The heat ray sensor 1 is a passive infrared sensor that is attached to, for example, the wall of a building, and that detects the presence of a human body moving in a detection area. The heat ray sensor 1 includes a first optical unit 100, a second optical unit 200, and a detector 400.

The first optical unit 100 outputs a first signal based on a variation in heat rays radiated from a first detection area described below. Specifically, the first optical unit 100 includes a first mirror 110, a first pyroelectric element 120, and a first housing 130.

The first mirror 110 is a first optical system that transmits, to the first pyroelectric element 120, heat rays radiated from the first detection area.

The first pyroelectric element 120 is arranged so as to face the first mirror 110 and outputs a first signal based on a variation in heat rays radiated from the first detection area and reflected by the first mirror 110. Specifically, when a surface of the first pyroelectric element 120 absorbs heat rays reflected by the first mirror 110, the temperature of the surface of the first pyroelectric element 120 increases. The first pyroelectric element 120 outputs to the detector 400 as a first signal a voltage generated by the pyroelectric effect in accordance with the variation in the temperature of the surface.

The first housing 130 supports the first mirror 110 and the first pyroelectric element 120. The first housing 130 is attached to the supporter 312 of a casing 300 described below so as to be swingable about an axis A parallel to a horizontal direction. Specifically, each of the first housing 130 and the supporter 312 includes through-holes (not illustrated) that extend in the horizontal direction. A screw 131 is inserted into the through-hole, whereby the first housing 130 is attached to the supporter 312 swingably about the axis A.

As illustrated in FIG. 2B, the first housing 130 is linked to the supporter 312 via a screw 133 across a spring 132 compressed in the lateral direction of FIG. 2B. Accordingly, a user can swing the first optical unit 100 and the second optical unit 200 about the axis A of the first optical unit 100 and the second optical unit 200 by moving the screw 133 in the lateral direction of FIG. 2B.

As illustrated in FIG. 2B, the first housing 130 includes a scale 134 for specifying the rotation angle (elevation angle) of the first optical unit 100 and the second optical unit 200 about the axis A. The user can specify the rotation angle of the first optical unit 100 and the second optical unit 200 about the axis A with the scale 134 seen from an edge 312a that extends in the vertical direction of the supporter 312, as viewed from a side of the heat ray sensor 1.

The second optical unit 200 outputs a second signal in accordance with a variation in heat rays radiated from a second detection area described below. The second optical unit 200 is arranged in a line with the first optical unit 100 in the vertical direction. Specifically, the second optical unit 200 includes a second mirror 210, a second pyroelectric element 220, and a second housing 230.

The second mirror 210 is a second optical system that transmits, to the second pyroelectric element 220, heat rays radiated from the second detection area.

The second pyroelectric element 220 is arranged so as to face the second mirror 210 and outputs a second signal in accordance with a variation in heat rays radiated from the second detection area and reflected by the second mirror 210. Specifically, when a surface of the second pyroelectric element 220 absorbs heat rays reflected by the second mirror 210, the temperature of the surface of the second pyroelectric element 220 increases. The second pyroelectric element 220 outputs, to the detector 400, a voltage generated by the pyroelectric effect in accordance with a variation in the temperature of the surface.

The second housing 230 supports the second mirror 210 and the second pyroelectric element 220. The second housing 230 is linked to the first housing 130 via a screw 231.

The casing 300 houses the first optical unit 100, the second optical unit 200, and the detector 400. Specifically, the casing 300 includes a base 310 and a cover (not illustrated) that covers the first optical unit 100, the second optical unit 200, and the detector 400.

The base 310 supports the first optical unit 100, the second optical unit 200, and the detector 400. Specifically, the base 310 includes an attachment 311 and the supporter 312. The back face of the attachment 311 is attached to the wall of a building or the like. The detector 400 is sandwiched and retained between the front face of the attachment 311 and the supporter 312. The supporter 312 integrally supports the first optical unit 100 and the second optical unit 200 swingably about the axis A.

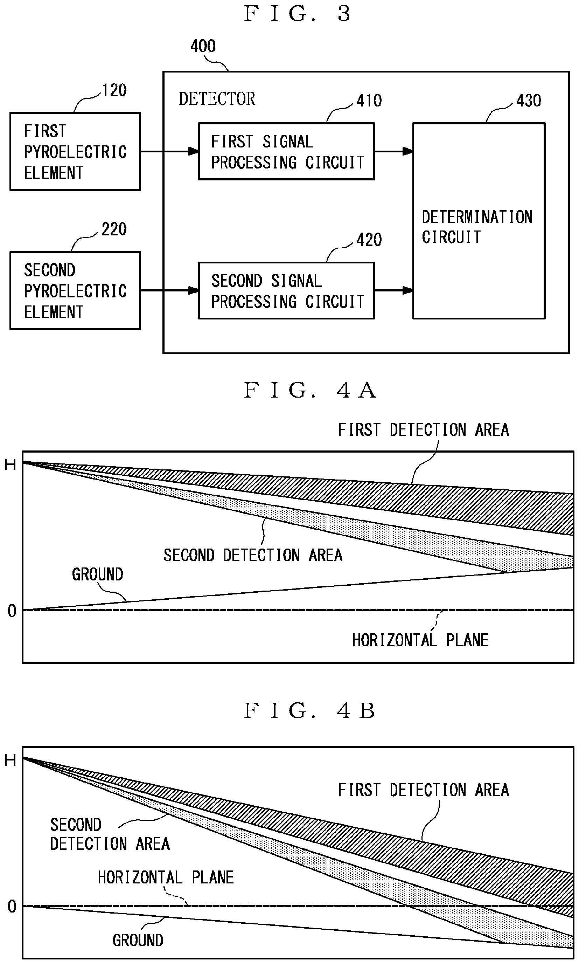

The detector 400 detects the presence of a human body in the first detection area and the second detection area on the basis of the first signal output from the first optical unit 100 and the second signal output from the second optical unit 200. Specifically, the detector 400 includes a circuit board including a first signal processing circuit 410, a second signal processing circuit 420, and a determination circuit 430, as illustrated in FIG. 3. The first signal processing circuit 410 is a circuit that processes the first signal output from the first pyroelectric element 120, and includes, for example, an amplifier circuit, a band-pass filter, and a comparison circuit. The second signal processing circuit 420 is a circuit that processes the second signal output from the second pyroelectric element 220, and includes, for example, an amplifier circuit, a band-pass filter, and a comparison circuit. On the basis of outputs from the first signal processing circuit 410 and the second signal processing circuit 420, the determination circuit 430 determines whether or not a human body is present in the first detection area and the second detection area. Upon determination that the human body is present in the first detection area and the second detection area, the determination circuit 430 outputs a control signal to an output device (not illustrated) such as, for example, a light emitting diode (LED), a speaker, or a display, to notify a user of the presence of the human body.

The operation of the heat ray sensor 1 according to the embodiment of the present disclosure is described below. A user moves the screw 133 in the lateral direction of FIG. 2B in accordance with the inclination of a wall to which the heat ray sensor 1 is attached and the inclination of a surface on which a human body to be detected moves, thereby adjusting the position of the first optical unit 100 and the second optical unit 200.

FIG. 2A illustrates the heat ray sensor 1 in a state in which the first optical unit 100 (first mirror 110) and the second optical unit 200 (second mirror 210) are turned in the most upward direction when the first optical unit 100 and the second optical unit 200 clockwise rotate about the axis A. Hereinafter, the position of the first optical unit 100 and the second optical unit 200 in the state of FIG. 2A is referred to as the "uppermost position".

FIG. 2B illustrates the heat ray sensor 1 in a state in which the first optical unit 100 (first mirror 110) and the second optical unit 200 (second mirror 210) are turned in the most downward direction when the first optical unit 100 and the second optical unit 200 counterclockwise rotate about the axis A. Hereinafter, the position of the first optical unit 100 and the second optical unit 200 in the state of FIG. 2B is referred to as the "lowermost position". Accordingly, the first optical unit 100 and the second optical unit 200 swing about the axis A between the uppermost position and the lowermost position.

The detection areas according to the embodiment of the present disclosure is described below. FIG. 4A is a side view illustrating an example of the first detection area and the second detection area in a case in which the first optical unit 100 and the second optical unit 200 are located at the uppermost position, as illustrated in FIG. 2A. FIG. 4B is a side view illustrating an example of the first detection area and the second detection area in a case in which the first optical unit 100 and the second optical unit 200 are located at the lowermost position, as illustrated in FIG. 2B. In each of FIGS. 4A and 4B, the vertical axis indicates a height based on a horizontal plane while the horizontal axis indicates a distance from a wall to which the heat ray sensor 1 is attached. In both FIGS. 4A and 4B, it is assumed that the heat ray sensor 1 is attached to a position at a height H from the horizontal plane on the wall.

In the example illustrated in FIG. 4A, a ground surface on which a human body to be detected moves is a slope that increases in height with distance from the heat ray sensor 1. Accordingly, the user sets the position of the first optical unit 100 and the second optical unit 200 at the uppermost position so that the heat ray sensor 1 detects the movement of the human body in the first detection area and the second detection area illustrated in FIG. 4A.

In the example illustrated in FIG. 4B, a ground surface on which the human body to be detected moves is a slope that decreases in height with distance from the heat ray sensor 1. Accordingly, the user sets the position of the first optical unit 100 and the second optical unit 200 at the lowermost position so that the heat ray sensor 1 detects the movement of the human body in the first detection area and the second detection area illustrated in FIG. 4B.

As illustrated in FIGS. 4A and 4B, when the user integrally moves the first optical unit 100 and the second optical unit 200, the first detection area and the second detection area also integrally move while maintaining the relative positional relationship between the first detection area and the second detection area.

As described above, the first optical unit 100 and the second optical unit 200 integrally swing about the axis A in the heat ray sensor 1 according to the embodiment of the present disclosure. Therefore, the first detection area and the second detection area can also integrally move while maintaining the relative positional relationship between the first detection area and the second detection area. Accordingly, a user can easily adjust the first detection area and the second detection area by adjusting the position of the first optical unit 100 and the second optical unit 200 depending on the inclination of a ground surface on which the human body to be sensed moves.

In the embodiment described above, the examples are described in which the human body to be sensed moves on slopes. However, examples to which the heat ray sensor 1 according to the present disclosure can be applied are not limited to such examples. A user can apply the heat ray sensor 1 according to the present disclosure to, for example, a case in which the human body to be sensed moves on stairs or a case in which the heat ray sensor 1 is attached to an inclined wall, by adjusting the position of the first optical unit 100 and the second optical unit 200 in accordance with the inclination of the stairs or the wall.

The foregoing describes some example embodiments for explanatory purposes. Although the foregoing discussion has presented specific embodiments, persons skilled in the art will recognize that changes may be made in form and detail without departing from the broader scope of the invention. Accordingly, the specification and drawings are to be regarded in an illustrative rather than a restrictive sense. This detailed description, therefore, is not to be taken in a limiting sense, and the scope of the invention is defined only by the included claims.

### Industrial Applicability

The present disclosure can be applied to a heat ray sensor that can detect the presence of a human body moving in a detection area.

### Reference Signs List

- 1: Heat ray sensor
- 100: First optical unit
- 110: First mirror
- 120: First pyroelectric element
- 130: First housing
- 131: Screw
- 132: Spring
- 133: Screw
- 134: Scale
- 200: Second optical unit
- 210: Second mirror
- 220: Second pyroelectric element
- 230: Second housing
- 231: Screw
- 300: Case
- 310: Base
- 311: Attachment
- 312: Supporter
- 312a: Edge
- 400: Detector
- 410: First signal processing circuit
- 420: Second signal processing circuit
- 430: Determination circuit

## Claims

1. A heat ray sensor (1) comprising:
a first optical unit (100) for outputting a first signal based on a variation in heat rays radiated from a first detection area;
a second optical unit (200) that is arranged side by side with the first optical unit (100), for outputting a second signal based on a variation in heat rays radiated from a second detection area; and
a casing (300) that houses the first optical unit (100) and the second optical unit (200),
the heat ray sensor (1), wherein
the casing (300) integrally supports the first optical unit (100) and the second optical unit (200) swingably about an axis (A) that is orthogonal to a direction of arrangement of the first optical unit (100) and the second optical unit (200),
the first optical unit (100) comprises: a first pyroelectric element (120) for outputting the first signal; a first optical system (110) for transferring, to the first pyroelectric element (120), heat rays radiated from the first detection area; and a first housing (130) that supports the first pyroelectric element (120) and the first optical system (110),
the second optical unit (200) comprises: a second pyroelectric element (220) for outputting the second signal; a second optical system (210) for transferring, to the second pyroelectric element (220), heat rays radiated from the second detection area; and a second housing (230) that supports the second pyroelectric element (220) and the second optical system (210) and is linked to the first housing (130) and
the casing (300) supports the first housing (130) swingably about the axis (A).

2. The heat ray sensor (1) according to claim 1, **characterized by** further comprising a detector (400) for detecting presence of a human body in the first detection area and the second detection area, based on the first signal output from the first optical unit (100) and the second signal output from the second optical unit (200).

## Patentansprüche

1. Wärmestrahlensensor (1), der Folgendes umfasst:
eine erste optische Einheit (100) zum Ausgeben eines ersten Signals auf der Grundlage einer Veränderung der von einem ersten Erfassungsbereich abgestrahlten Wärmestrahlen;
eine zweite optische Einheit (200), die Seite an Seite mit der ersten optischen Einheit (100) angeordnet ist, zur Ausgabe eines zweiten Signals auf der Grundlage einer Veränderung der von einem zweiten Erfassungsbereich abgestrahlten Wärmestrahlen; und
ein Gehäuse (300), das die erste optische Einheit (100) und die zweite optische Einheit (200) aufnimmt,
wobei der Wärmestrahlensensor (1) **dadurch gekennzeichnet ist, dass**
das Gehäuse (300) die erste optische Einheit (100) und die zweite optische Einheit (200) einstückig um eine Achse (A) schwenkbar trägt, die orthogonal zu einer Anordnungsrichtung der ersten optischen Einheit (100) und der zweiten optischen Einheit (200) ist,
die erste optische Einheit (100) umfasst: ein erstes pyroelektrisches Element (120) zum Ausgeben des ersten Signals; ein erstes optisches System (110) zum Übertragen von Wärmestrahlen, die von dem ersten Erfassungsbereich abgestrahlt werden, zu dem ersten pyroelektrischen Element (120);
und ein erstes Gehäuse (130), das das erste pyroelektrische Element (120) und das erste optische System (110) trägt,
die zweite optische Einheit (200) umfasst: ein zweites pyroelektrisches Element (220) zum Ausgeben des zweiten Signals; ein zweites optisches System (210) zum Übertragen von Wärmestrahlen, die von dem zweiten Erfassungsbereich abgestrahlt werden, zu dem zweiten pyroelektrischen Element (220); und ein zweites Gehäuse (230), das das zweite pyroelektrische Element (220) und das zweite optische System (210) trägt und mit dem ersten Gehäuse (130) verbunden ist, und das Gehäuse (300) das erste Gehäuse (130) schwenkbar um die Achse (A) trägt.

2. Wärmestrahlensensor (1) nach Anspruch 1, **dadurch gekennzeichnet, dass** er ferner einen Detektor (400) zum Erfassen der Anwesenheit eines menschlichen Körpers in dem ersten Erfassungsbereich und dem zweiten Erfassungsbereich auf der Grundlage des ersten Signalausgangs von der ersten optischen Einheit (100) und des zweiten Signalausgangs von der zweiten optischen Einheit (200) umfasst.

## Revendications

1. Capteur de rayonnement thermique (1) comprenant :
une première unité optique (100) pour délivrer un premier signal sur la base d'une variation des rayonnements thermiques irradiés à partir d'une première zone de détection ;
une seconde unité optique (200) qui est agencée côte à côte avec la première unité optique (100), pour délivrer un second signal sur la base d'une variation des rayonnements thermiques irradiés à partir d'une seconde zone de détection ; et
un boîtier (300) qui loge la première unité optique (100) et la seconde unité optique (200),
le capteur de rayonnement thermique (1), dans lequel
le boîtier (300) supporte intégralement la première unité optique (100) et la seconde unité optique (200) de manière oscillante autour d'un axe (A) qui est orthogonal à une direction d'agencement de la première unité optique (100) et de la seconde unité optique (200),
la première unité optique (100) comprend : un premier élément pyroélectrique (120) pour délivrer le premier signal ; un premier système optique (110) pour transférer, vers le premier élément pyroélectrique (120), les rayonnements thermiques irradiés à partir de la première zone de détection ; et un premier logement (130) qui supporte le premier élément pyroélectrique (120) et le premier système optique (110),
la seconde unité optique (200) comprend : un second élément pyroélectrique (220) pour délivrer le second signal ; un second système optique (210) pour transférer, vers le second élément pyroélectrique (220), les rayonnements thermiques irradiés à partir de la seconde zone de détection ; et un second logement (230) qui supporte le second élément pyroélectrique (220) et le second système optique (210) et est relié au premier logement (130), et
le boîtier (300) supporte le premier logement (130) de manière oscillante autour de l'axe (A).

2. Capteur de rayonnement thermique (1) selon la revendication 1, **caractérisé en ce qu'**il comprend en outre un détecteur (400) pour détecter la présence d'un corps humain dans la première zone de détection et la seconde zone de détection, sur la base du premier signal délivré par la première unité optique (100) et du second signal délivré par la seconde unité optique (200).
